# EUROPÄISCHE PATENTSCHRIFT

(11) **EP 3 534 138 B1**
(45) Veröffentlichungstag und Bekanntmachung des Hinweises auf die Patenterteilung: **25.12.2024**
(21) Anmeldenummer: 18159443.3
(22) Anmeldetag: 01.03.2018
(51) Int. Cl.: G01N 1/22, C12M 1/22, C12M 1/26, C12M 1/28

(54) **TRANSPORTABLE PARTIKELSAMMELVORRICHTUNG**
TRANSPORTABLE PARTICLE COLLECTING DEVICE
DISPOSITIF DE COLLECTE DE PARTICULES TRANSPORTABLE

(43) Veröffentlichungstag der Anmeldung: 04.09.2019
(60) Teilanmeldung: 24209318.5
(73) Patentinhaber: CleanControlling GmbH, 78576 Emmingen-Liptingen (DE)
(72) Erfinder: BURGER, Volker, 78576 Emmingen-Liptingen (DE)
(74) Vertreter: Patent- und Rechtsanwälte Behrmann Wagner PartG mbB

(56) Entgegenhaltungen:
- EP-A2- 2 228 433
- WO-A1-2019/161058
- WO-A2-2007/009863
- US-A- 3 649 463
- US-A1- 2016 305 854
- EMD MILLIPORE: "The MAS-100 Family Leading solutions for air monitoring EMD Millipore", 20 August 2015 (2015-08-20), Darmstadt, XP055505596, Retrieved from the Internet <URL:https://www.emdmillipore.com/Web-PR-Site/en_CA/-/USD/ShowDocument-Pronet?id=201503.120> [retrieved on 20180907]
- CLEANCONTROLLING: "Partikelmonitoring: Partikelfalle Positionierung und Aktivierung", 23 January 2014 (2014-01-23), XP055882351, Retrieved from the Internet <URL:https://www.youtube.com/watch?v=6l1_IvZSwIo>
- CLEANCONTROLLING: "Partikelmonitoring: Partikelfalle Deaktivierung und Auswertung", 22 January 2014 (2014-01-22), XP055882369, Retrieved from the Internet <URL:https://www.youtube.com/watch?v=22o23YwVMvc>
- MICROBIAL TESTING FOR PHARMA & F&B - MILLIPORESIGMA: "ICR Plus lockable plates - Pharma", 9 March 2015 (2015-03-09), XP055882411, Retrieved from the Internet <URL:https://www.youtube.com/watch?v=g9X5BejrnXQ>

## Beschreibung

Die vorliegende Erfindung betrifft eine transportable Partikelsammelvorrichtung zum Überwachen einer Umgebungssauberkeit in einer Produktionsstätte nach dem Oberbegriff des Patentanspruchs 1.

Aus dem gattungsbildenden Stand der Technik sind Partikelsammelvorrichtungen nach dem Oberbegriff des Hauptanspruchs allgemein bekannt. Die bekannten Partikelsammelvorrichtungen werden üblicherweise für Überwachungs- und Dokumentationszwecke der Umgebungssauberkeit an einem Messort, insbesondere in einer Produktionsstätte, eingesetzt. Hierfür umfassen die, auch als Partikelfallen bezeichneten Partikelsammelvorrichtungen eine Sammelfläche, die in einem Messzustand der Partikelsammelvorrichtung bevorzugt horizontal ausgerichtet wird, um die in der Umgebungsluft enthaltenen Schmutzpartikel durch Sedimentation aufzunehmen. Zur Fixierung der auf der Sammelfläche sedimentierten Schmutzpartikel weist die Sammelfläche, insbesondere chemisch wirkende, Haftmittel auf. Ferner umfasst die Partikelsammelvorrichtung Abdeckmittel, die in einem Transportzustand formschlüssig auf der Sammeleinheit anordnenbar sind, um zu vermeiden, dass sich außerhalb der Messzeit, also vor und nach dem stationären Aufstellen der Partikelsammelvorrichtung im Messzustand, Schmutzpartikel auf der Sammelfläche festsetzen, was andernfalls eine Verfälschung des Messergebnisses zur Folge hätte.

Die Verwendung einer solchen gattungsbildenden Partikelsammelvorrichtung wird teilweise Zulieferern der Automobilindustrie vorgeschrieben und dient zur Dokumentation der Reinheit (Umgebungssauberkeit) bei Fertigungsprozessen von zugelieferten Bauteilen. Die Vorgehensweise wird in dem Band 19.2 des Verbands der Automobilindustrie e. V. (VDA Band 19.2, Technische Sauberkeit in der Montage - Umgebung, Logistik, Personal und Montageeinrichtungen) auf den Seiten 161 - 173 beschrieben. Aus den Ausführungen wird ersichtlich, dass die Partikelsammelvorrichtung bzw. Sammelfläche nicht nur waagrecht aufgestellt werden sollte, sondern für das Erzielen eines aussagekräftigen Messergebnisses am Messort zur Vermeidung eines Verrutschens auch mit dem Untergrund fixiert werden sollte. Nach dem Positionieren der Partikelsammelvorrichtung müssen zur Aktivierung und dem Starten der Messzeit die Abdeckmittel von der Sammeleinheit entfernt werden, um die Haftmittel aufweisende Sammelfläche freizulegen, damit darauf in der Umgebungsluft enthaltene Schmutzpartikel sedimentieren können. Während der Messzeit sind die Abdeckmittel an einem sauberen Ort aufzubewahren, da der Messvorgang durch das Wiederverschließen der Sammeleinheit mit den Abdeckmitteln beendet wird und sämtliche an den Innenflächen der Abdeckmittel festgesetzten zusätzlichen Schmutzpartikel zu einer Verfälschung des Messergebnisses führen würde. Jedoch werden die Abdeckmittel oft gerne in normalen Büroschubladen od. dgl. frei zugänglichen Lagerorten aufbewahrt, wo sich dann doch Schmutzpartikel an den Innenflächen festsetzen können. Diese zusätzlichen Schmutzpartikel können dann zur Folge haben, dass ein kritischer Richtwert der Umgebungssauberkeit überschritten wird, weshalb nachträglich eine ganze Produktionscharge an hergestellten Bauteilen aufgrund der falsch ermittelten Umgebungssauberkeit als Mangelware aussortiert werden müssen und/oder aufwändig nachgesäubert werden müssen.

Ferner besteht die Gefahr, dass sich im Transportzustand die Abdeckmittel von der Sammeleinheit lösen und es zu einer Reaktivierung der Partikelfalle kommt, was insbesondere beim Befördern der Partikelsammelvorrichtung mit einem externen Dienstleister (etwa der Post) für Auswerte- und/oder Analysezwecke an einen ausgelagerten Analyseort vorkommen kann. Auch dies führt zu einer starken Verfälschung des Messergebnisses, insbesondere da sich die Schmutzpartikel aus verschiedenen Partikelfallen einer Postsendung vermischen können.

Der Produktkatalog Emd Millipore: "The MAS-100 Family Leading solutions for air monitoring EMD Millipore", 20. August 2015 zeigt eine Zellkulturschale zum Sammeln von Mikroorgansimen, insbesondere Bakterien aus der Luft, wobei eine Sammelfläche ein Nährmedium zur Kultivierung der Mikroorganismen aufweist. Dabei kann ein Abdeckmittel mit einer Sammeleinheit verbunden und geschlossen werden, wobei zusätzlich in einem halbgeschlossenen Zustand für ein Inkubationsverfahren Lüftungslöcher ausgebildet werden.

Die US 3,649,463 A offenbart eine Zellkulturschale mit einem zylindrischen Behälter mit umfangsseitigen Greifrand zum Transport der Zellkulturschale und einem Abdeckmittel.

Die EP 3 228 433 A2 zeigt eine Zellkulturschale, ebenfalls mit einem Greifrand, wobei ein Abdeckmittel auf eine offene Zellkulturschale aufgelegt und mit dieser eine abdichtende und Verbindung eingehen kann.

Die WO 2007/009863 A3 zeigt eine Partikelsammelvorrichtung mit einer Sammelfläche um Sammeln von sedimentierenden Schmutzpartikeln aus der Umgebungsluft, wobei ein Sammelbehälter für einen Transport geschlossen werden kann.

Die US 2016/0305854 A1 offenbart eine Partikelsammelvorrichtung für einen Ventilator mit Haftmitteln auf einer Sammelfläche, wobei die Vorrichtung in einer V-Form mittels Steckelementen an Lamellen eines Ventilators angesteckt werden kann.

Die unter www.youtube.com abrufbare Videoaufnahme Cleancontrolling, "Partikelmonitoring: Partikelfalle Positionierung und Aktivierung", 23.01.2014, zeigt eine Partikelsammelvorrichtung zur Überwachung einer Umgebungssauberkeit mit einer Sammeleinheit, einer Sammelfläche zum Sammeln von sedimentierenden Schmutzpartikeln, wobei ein Abdeckmittel auf die Sammeleinheit auflegbar ist.

Die unter www.youtube.com abrufbare Videoaufnahme Cleancontrolling, "Partikelmonitoring: Partikelfalle Deaktivierung und Auswertung", 22.01.2014, zeigt ebenfalls eine Partikelsammelvorrichtung auf die ein Abdeckmittel auflegbar ist.

Die unter www.youtube.com abrufbare Videoaufnahme Microbial Testing For Pharma & F&b - Milliporesigma, 09.03.2015 offenbart eine Zellkulturschale mit einem verschließbaren Abdeckmittel.

Die WO 2019/161058 A1 zeigt einen Durchluftfilter zum Sammeln von Partikeln aus einer aktiv angesaugten Umgebungsluft, wobei eine Filtereinheit in ein Gehäuse eingesetzt wird das von einer Oberseite verschließbar ist und wobei auf einer Unterseite das Gehäuse mit einem Pumpenmittel verbindbar ist.

Ausgehend von dem vorgenannten Stand der Technik besteht die Aufgabe der Erfindung darin, eine gattungsgemäße transportable Partikelsammelvorrichtung im Hinblick auf die Messgenauigkeit zu optimieren. Hierbei soll der Einfluss von das Messergebnis der Partikelsammelvorrichtung beeinflussenden und/oder verfälschenden Störgrößen verringert werden, um somit die Messgenauigkeit der Partikelsammelvorrichtung zu verbessern.

Die Aufgabe wird durch die transportable Partikelsammelvorrichtung mit den Merkmalen des Hauptanspruchs gelöst. Vorteilhafte Weiterbildungen der Erfindung sind in den Unteransprüchen beschrieben.

In erfindungsgemäß vorteilhafter Weise weist die erfindungsgemäße Sammeleinheit eine ein Boden- und/oder Etagenelement umfassende hohlzylindrische oder kegelförmige Mantelfläche auf, wobei die Innenfläche des Boden- bzw. Etagenelements die Sammelfläche aufweist und die Sammelfläche in einer Hochrichtung nicht von der Mantelfläche überragt wird. Diese Ausführung ermöglicht es an einem Analyseort das unmittelbare Anordnen von großflächigen Analysemitteln auf der Sammelfläche und erleichtert auf diese Weise die Analyse der aufgefangenen Partikel. Darüber hinaus ermöglicht es diese Ausführung die Sammeleinheit der Partikelsammelvorrichtung auch als Schmutzpartikelstempel zu verwenden und erweitert auf diese Weise vorteilhaft den Anwendungsbereich der Partikelsammelvorrichtung. Dazu wird die Sammelfläche zur Aufnahme von Schmutzpartikeln am Messort kurzzeitig auf eine zu analysierende Oberfläche aufgedrückt.

In weiterhin erfindungsgemäß vorteilhafter Weise ermöglicht die erfindungsgemäße transportable Partikelsammelvorrichtung im Messzustand das formschlüssige Anordnen der Abdeckmittel mit der Sammeleinheit, um das Festsetzen von zusätzlichen Schmutzpartikeln an sämtlichen Innenflächen der Abdeckmittel zu vermeiden. Mit anderen Worten kann die Sammeleinheit im Messzustand derartig auf den Abdeckmitteln angeordnet werden, dass zum einen die Sammelfläche der Sammeleinheit zum Sammeln der sedimentierenden Schmutzpartikel in der Umgebungsluft der Produktionsstätte, insbesondere horizontal, ausgerichtet wird und zum anderen, dass sämtliche Innenflächen der Abdeckmittel durch die formschlüssige Anordnung unter der Sammeleinheit vor der Verunreinigung durch sedimentierende Schmutzpartikel aus der Umgebungsluft geschützt werden. Durch diese erfindungsgemäße Maßnahme kann sichergestellt werden, dass nach Beenden der Messzeit, also im Transportzustand der Partikelsammelvorrichtung, keine zusätzlichen Schmutzpartikel auf die Sammelfläche sedimentieren, die sich zuvor im Messzustand, also während der Messzeit, auf den Innenflächen der Abdeckmittel festgesetzt haben.

Darüber hinaus sind erfindungsgemäß, insbesondere einstückig mit den Abdeckmitteln und/oder der Sammeleinheit ausgebildete, Fixiermittel vorgesehen, die im Transportzustand das Fixieren der Abdeckmittel auf der Sammeleinheit ermöglichen, um im Transportzustand ein (unbeabsichtigtes) Öffnen der Sammeleinheit zu vermeiden. Durch diese erfindungsgemäße Maßnahme kann sichergestellt werden, dass während des Transports der Partikelsammelvorrichtung im Transportzustand keine weiteren Schmutzpartikel in die Sammeleinheit gelangen, die sich andernfalls auch dann auf der Sammelfläche festsetzen könnten und eine Verfälschung des Messergebnisses der Umgebungssauberkeit zur Folge hätten.

Darüber hinaus ist es auch Gegenstand der Erfindung, ein Verfahren zum Betreiben einer erfindungsgemäßen transportablen Partikelsammelvorrichtung anzugeben, das zumindest die folgenden Schritte aufweist: Die transportable Partikelsammelvorrichtung wird aus dem Transportzustand in den Messzustand überführt, indem die formschlüssig auf der Sammeleinheit angeordneten und über, insbesondere einstückig mit den Abdeckmitteln und/oder der Sammeleinheit vorgesehenen, Fixiermitteln mit der Sammeleinheit fixierten Abdeckmittel von der Sammeleinheit gelöst werden, um anschließend wieder formschlüssig mit der Sammeleinheit angeordnet zu werden, derart, dass sich im Messzustand auf sämtlichen Innenflächen der Abdeckmittel keine zusätzlichen Schmutzpartikel aus der Umgebungsluft festsetzen können. Darüber hinaus erfolgt im Messzustand das, insbesondere horizontale, Ausrichten der Sammelfläche zum gleichmäßigen Sammeln der in der Umgebungsluft am Messort enthaltenen und auf die Sammelfläche sedimentierenden Schmutzpartikel.

Erfindungsgemäß ist es vorgesehen, dass die Abdeckmittel flächig ausgebildet sind und die Sammeleinheit in einem Randbereich wenigstens bereichsweise überragen, wobei der Randbereich wenigstens ein winklig zur Flächenerstreckung der Abdeckmittel angeordneten Randabschnitt aufweist, der im Transportzustand und/oder im Messzustand, insbesondere innen- und/oder endseitig, mit wenigstens einer Anlagefläche der Sammeleinheit in Wirkverbindung steht. In diesem Zusammenhang ist es bevorzugt vorgesehen, dass der Randabschnitt formschlüssig mit der Anlagefläche in Wirkverbindung steht, um das Eindringen von Schmutzpartikeln in das Innere der Sammeleinheit zu vermeiden. Weiter erfindungsgemäß ist es hierbei, wenn die Fixiermittel in dem Randabschnitt vorgesehen sind und eine mechanische Fixierung und Ausrichtung der Abdeckmittel über die Anlagefläche der Sammeleinheit ermöglichen. Dies realisiert die vorteilhafte Ausbildung von einstückigen Fixiermitteln, um im Transportzustand das erfindungsgemäße Fixieren der Abdeckmittel auf der Sammeleinheit zu ermöglichen.

In einer Weiterbildung der Erfindung sind die Fixiermittel derart ausgebildet, dass im Transportzustand die formschlüssige Anordnung der Abdeckmittel auf der Sammeleinheit durch eine orthogonal zur Sammelfläche wirkende Kraftbeaufschlagung in eine Heberichtung lösbar ist, wobei im Messzustand zum Lösen der Formschlussverbindung zwischen den Abdeckmitteln und der Sammeleinheit eine entgegen der Heberichtung wirkende Kraft in die Partikelsammelvorrichtung, insbesondere in die Abdeckmittel, eingebracht werden muss. Hierbei ist ein vorteilhaft einfaches und für ein Bedienpersonal komfortables Überführen der Partikelsammelvorrichtung zwischen Messzustand und Transportzustand möglich.

In einer bevorzugten Ausführungsform der erfindungsgemäßen transportablen Partikelsammelvorrichtung weisen die Fixiermittel im Transportzustand zum Fixieren der Abdeckmittel auf der Sammeleinheit Rastmittel auf, die bevorzugt ein elastisch deformierbares Rastelement umfassen, das weiter bevorzugt in Wirkverbindung mit einer Umfangsnut der Sammeleinheit oder der Abdeckmittel steht. Neben einer zuverlässigen Fixierung der Abdeckmittel auf der Sammeleinheit bietet dies den Vorteil, dass die Fixierung mittels der Rastmittel leicht lösbar ist. Neben einem einfachen Überführen der Partikelsammelvorrichtung vom Transportzustand in den Messzustand zum Starten der Messzeit (Aktivieren der Partikelsammelvorrichtung) ermöglicht dies ein vorteilhaft zuverlässiges Verschließen der Partikelsammelvorrichtung zum Realisieren des Transportzustands sowie dann auch wieder ein vorteilhaft einfaches und komfortables Wiederöffnen der Partikelsammelvorrichtung für Analyse- und Auswertezwecke aus dem Transportzustand am Analyseort. Zweckmäßig ist hierbei auch, dass eine Beschädigung der Partikelsammelvorrichtung beim Erst- und Wiederöffnen vermieden wird, wobei dennoch beim Transportieren und/oder Lagern ein zuverlässiges Verschließen der Partikelsammelvorrichtung gegeben ist (Schützen der Sammeleinheit vor dem Eindringen von zusätzlichen Schmutzpartikeln).

In einer Fortbildung der Erfindung weist die Sammeleinheit eine Hocherstreckung zwischen 0,5cm bis 5cm, insbesondere zwischen 0,5cm bis 2,5cm und/oder eine Quer- und/oder Längserstreckung und/oder Radialerstreckung zwischen 2cm bis 15cm, insbesondere zwischen 4cm bis 10cm auf. Es hat sich gezeigt, dass bei diesen zweckmäßigen Dimensionierungsmaßen der Sammeleinheit eine Sammelfläche entsteht, die zum einen nur im geringen Maße durch die, insbesondere entlang der Hocherstreckung der Sammeleinheit die Sammelfläche abschnittsweise überragende, Mantelfläche beeinflusst wird und gleichzeitig ein ausreichend aussagekräftiges und/oder reproduzierbares Messergebnis durch das Bereitstellen einer ausreichend groß dimensionierten Sammelfläche liefert.

Weiterbildend ist es weiter bevorzugt vorgesehen, dass die Sammeleinheit und/oder die Abdeckmittel aus einem Kunststoffmaterial, insbesondere aus einem Plastomermaterial, hergestellt ist/sind und/oder transparent ausgebildet ist/sind. Durch die transparente Ausbildung ist eine einfache Sichtprüfung durch geschultes Bedienpersonal möglich, um den Verschmutzungsgrad der Sammeleinheit und der Sammelfläche zu prüfen. Somit kann frühzeitig auf einen zu großen Verschmutzungsgrad reagiert werden, wobei dann direkt nötige Gegenmaßnamen eingeleitet werden können, ohne dass eine (vorbestimmte) Messdauer (Zeitintervall) abgewartet werden muss und/oder dann noch eine zusätzliche Verzögerung für den Transport der Partikelsammelvorrichtung vom Messort zum Analyseort und der dort anschließenden Analyse der Sammelfläche entsteht.

Weiterbildend ist es in diesem Zusammenhang vorgesehen, dass die Sammelfläche und oder die Haftmittel auf der Sammelfläche für eine optische Sichtprüfung des Verschmutzungsgrads (Bestimmung von Anzahl und Größe der Schmutzpartikel) durch geschultes Bedienpersonal eine weiße oder schwarze Kontrastfärbung aufweist/en. Durch diese vorteilhafte Maßnahme kann in Abhängigkeit der zu analysierenden Schmutzpartikel die Sichtprüfung durch das Bedienpersonal vereinfacht werden, um frühzeitig hohe Schmutzpartikelanteile in der Umgebungsluft erkennen und entsprechende Gegenmaßnahmen einleiten zu können. Insbesondere bei der Verwendung der Partikelsammelvorrichtung in einer Produktionsstätte kann dies dazu beitragen, hohe Kosten für fehlerhaft produzierte Zulieferkomponenten (Bauteile) zu vermeiden, da ganze Produktionschargen aufgrund eines nachweislich zu hohen Schmutzpartikelanteils in der Umgebungsluft andernfalls nicht weiter verwendbar wären bzw. aufwändig gereinigt werden müssten, was zudem hohe Schadenersatzansprüche zur Folge haben könnte.

Weiterbildend ist es auch vorgesehen, dass im Messzustand die Partikelsammelvorrichtung auf, insbesondere eine Positionierungsmarkierung aufweisenden, flächig ausgebildeten Handhabungsmitteln angeordnet ist, wobei die Sammeleinheit im Messzustand derart auf den Handhabungsmitteln angeordnet ist, dass ein von Seitenmodulen und/oder Seitenwänden des Messorts, insbesondere der Produktionsstätte, beabstandetes Anordnen (Ausrichten) der Sammelfläche gewährleistet wird. Auch diese vorteilhafte Maßnahme trägt zu der Reduzierung von auf die Messung einwirkenden Störgrößen bei, da hierdurch auf überraschend einfache Weise im Messzustand die Einhaltung eines Mindestabstandes der Sammeleinheit ermöglicht wird.

In einer bevorzugten Weiterbildung der Partikelsammelvorrichtung sind die Handhabungsmittel mit den Abdeckmitteln, insbesondere über mechanische und/oder chemische Verbindungsmittel, fest verbunden, wobei im Messzustand die Abdeckmittel auf den Handhabungsmitteln angeordnet sind, um für die Mindestbeabstandung der Sammeleinheit zu Seitenmodulen und/oder Seitenwänden zu sorgen. Mit anderen Worten ausgedrückt, ist im Messzustand die Partikelsammelvorrichtung auf den Handhabungsmitteln angeordnet, da diese fest mit den Abdeckmitteln verbunden sind. Somit wird beim Überführen der Partikelsammelvorrichtung vom Transportzustand in den Messzustand die Abdeckmittel einschließlich der Handhabungsmittel von der formschlüssigen Anordnung auf der Sammeleinheit gelöst, um dann die Abdeckmittel, insbesondere an der Unterseite der Sammeleinheit, wieder formschlüssig mit der Sammeleinheit zu verbinden, wobei dann die Handhabungsmittel zur Sammeleinheit auf der gegenüberliegenden Stirnseite der Abdeckmittel angeordnet sind.

Weiter bevorzugt ist es, wenn die flächig ausgebildeten Handhabungsmittel eine beschreibbare Oberfläche aufweisen, wobei darauf ausfüllbare Aufdrucke vorgesehen sind, die insbesondere formularartig ausgebildet sind. Dies ermöglicht es den Messvorgang durch Bedienpersonal standardisiert zu dokumentieren, um einen Messvorgang mit der Partikelsammelvorrichtung zu protokolieren und somit am Analyseort jeder (analysierten) Partikelsammelvorrichtung eindeutig einen Messort sowie die Messzeit zuzuordnen, da die Messung durch diese Daten charakterisierbar ist.

Weiterbildend ist es vorgesehen, dass die Handhabungsmittel aus Papier, Pappe, Kartonage und/oder einer bevorzugt aus Kunstsoff hergestellten Folie ausgebildet sind und somit nicht nur kostengünstig herstellbar sind, sondern sich gleichzeitig auch zum Beschriften mit einem handelsüblichen Handschreibgerät, insbesondere einem Folienstift eignen. Neben einer vorteilhaft einfachen Dokumentation des Messvorgangs (durch die charakterisierenden Messdaten) führt dies zu einer geringen Fehlerquelle auch bei wechselndem, teils schlecht geschultem Bedienpersonal.

Weiterbildend erstrecken sich die Handhabungsmittel entlang einer Längsachse, wobei im Messzustand die Partikelsammelvorrichtung, insbesondere die Abdeckmittel und die Sammelfläche aufweisende Sammeleinheit, auf einem Ende der Handhabungsmittel vorgesehen und/oder angeordnet ist/sind und durch das andere Ende der Handhabungsmittel Greifmittel zum Greifen und Positionieren der Partikelsammelvorrichtung ausgebildet werden.

Hierbei sieht eine bevorzugte Ausbildungsform der Handhabungsmittel vor, dass die Außenkontur der Handhabungsmittel wenigstens abschnittsweise parallel zur Partikelsammelvorrichtung, insbesondere zur hohlzylindrischen oder kegelförmigen Mantelfläche der Sammeleinheit und/oder der Abdeckmittel ausgebildet sind, wodurch auf vorteilhaft einfache Weise eine Mindestbeabstandung zu Seitenmodulen und/oder Seitenwänden des Messorts einhaltbar bzw. realisierbar ist.

Schließlich umfasst die Erfindung auch eine Ausbildung der Partikelsammelvorrichtung, wobei die Handhabungsmittel einen, insbesondere lösbaren, Klebestreifen, bevorzugt ausgebildet als Power-Strips^{®}, zum Ausbilden einer Haftverbindung zwischen der Unterseite der Handhabungsmittel und einem Untergrund am Messort umfassen. Hierbei überragt der Klebestreifen die Handhabungsmittel, insbesondere entlang der Längsachse L, abschnittsweise zum Ausbilden eines Halteabschnitts zwischen Daumen und Zeigefinger einer Bedienperson. Ferner ist im Bereich des Halteabschnitts eine ein Schutzmantel für den Klebestreifen ausbildende Banderole vorgesehen, die den Halteabschnitt bevorzugt an der Ober- und Unterseite sowie an den beiden Seitenflächen bereichsweise umgibt und, insbesondere in den Seitenflächen des Klebestreifens in Wirkverbindung mit dem Klebestreifen steht. Mit anderen Worten vermeidet die Banderole ein Verkleben von mehreren Partikelsammelvorrichtungen im Transportzustand vor der Durchführung bzw. Initialisierung eines Messvorgangs.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Explosionszeichnung einer bevorzugten Ausführungsform der erfindungsgemäßen transportablen Partikelsammelvorrichtung,
- Fig. 2:: eine perspektivische Darstellung der aus Fig. 1 bekannten Partikelsammelvorrichtung in der linken Figurenhälfte im Messzustand und in der rechten Figurenhälfte im Transportzustand,
- Fig. 3:: eine Seitenansicht der aus Fig. 1 bekannten Partikelsammelvorrichtung im Messzustand,
- Fig. 4:: eine stark vergrößerte Darstellung der Fixiermittel sowie
- Fig. 5A u. Fig. 5B:: eine endseitige Darstellung der Handhabungsmittel in Fig. 5A sowie eine Schnittdarstellung des Klebestreifens in Fig. 5B.

In den Figuren sind funktionsgleiche oder zueinander äquivalente Elemente und Baugruppen mit den gleichen Bezugszeichen gekennzeichnet.

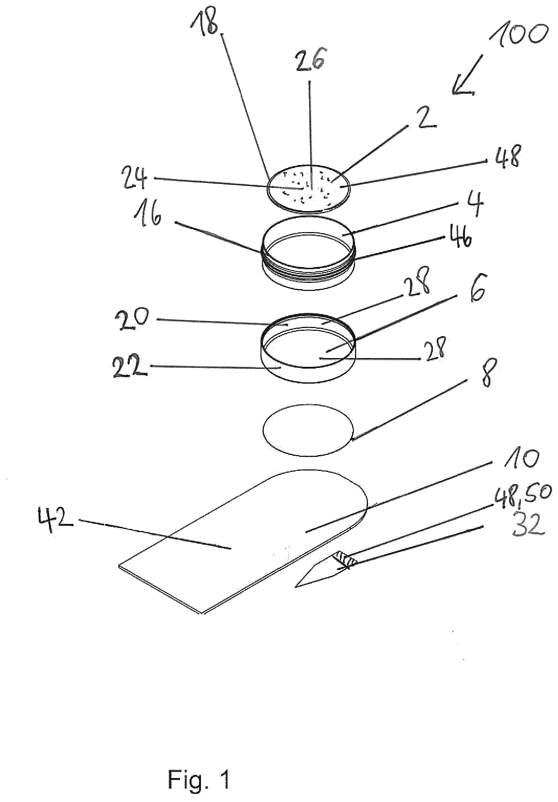

In der Fig. 1 ist eine Explosionszeichnung einer bevorzugten Ausführungsform der erfindungsgemäßen transportablen Partikelsammelvorrichtung 100 gezeigt, wobei die Anordnung der Komponenten die Partikelsammelvorrichtung 100 in einem Messzustand 12 zeigen. Die Partikelsammelvorrichtung 100 umfasst eine eine Sammelfläche 2 aufweisende Sammeleinheit 4, Abdeckmittel 6 sowie Handhabungsmittel 10, die über chemisch wirkende Verbindungsmittel 8 mit den Abdeckmitteln 6 verbunden sind. Ferner ist der Unterseite der Handhabungsmittel 10 ein Klebestreifen 32 zugeordnet, um die Handhabungsmittel 10 an einem Messort am Untergrund zu fixieren und so eine feste Position der Partikelsammelvorrichtung 100 während der gesamten Messzeit zu gewährleisten. Der Klebestreifen 32 überragt die Unterseite der Handhabungsmittel 10 abschnittsweise, derart, dass vom überstehenden Endabschnitt des Klebestreifens 32 ein Halteabschnitt 48 zum Greifen des Klebestreifens 32 zwischen Daumen und Zeigefinger ausgebildet wird. Ferner ist der Halteabschnitt 48 mit einer Banderole 50 umwickelt, die zumindest an den Seitenflächen des Klebestreifens 32 mit dem Klebestreifen 32 in Wirkverbindung steht. Für eine kostengünstige Großserienherstellung sind die die Sammelfläche 2 aufweisende Sammeleinheit 4 sowie die Abdeckmittel 6 aus einem transparenten Kunststoffmaterial 48 gefertigt. Ferner weisen die auf der Sammelfläche 2 vorgesehenen Haftmittel 26 eine weiße Kontrastfärbung 48 auf, um auch eine optische Sichtprüfung des Verschmutzungsgrads der Sammelfläche 2 durch geschultes Bedienpersonal zu ermöglichen.

Die in der Fig. 1 dargestellte Sammeleinheit 4 weist eine hohlzylindrische Mantelfläche 16 auf, wobei zur Ausbildung der Sammelfläche 2 ein Etagenelement 18 im Inneren der Mantelfläche 16 vorgesehen ist, das bevorzugt als einstückiges Bauteil mit der hohlzylindrischen Mantelfläche 16 ausgeführt ist. Das Etagenelement 18 bildet die Sammelfläche 2 aus und umfasst Haftmittel 26, die das Fixieren der aus der Umgebungsluft auf die Sammelfläche 2 sedimentierten Schmutzpartikel 24 ermöglichen. Auch die Innenflächen 28 aufweisenden Abdeckmittel 6 umfassen eine runde, flächig ausgebildete Grundfläche und besitzen in einem Randbereich 20 einen Randabschnitt 22, der im Messzustand 12 mit der Mantelfläche 16 der Sammeleinheit 4 als Anlagefläche 46 in Wirkverbindung steht.

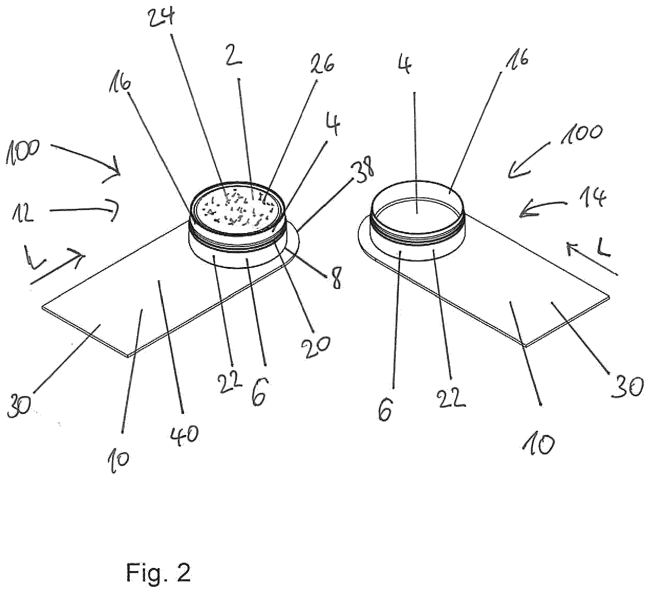

In der Fig. 2 ist die aus der Fig. 1 bekannte transportable Partikelsammelvorrichtung 100 in einer perspektivischen Seitendarstellung abgebildet, wobei in der linken Figurenhälfte der Fig. 2 die erfindungsgemäße Partikelsammelvorrichtung 100 in dem Messzustand 12 und in der rechten Figurenhälfte der Fig. 2 die erfindungsgemäße Partikelsammelvorrichtung 100 in dem Transportzustand 14 dargestellt ist.

Um eine Messung zur Überwachung der Umgebungssauberkeit an einem Messort durchzuführen, muss die transportable Partikelsammelvorrichtung 100 im Messzustand 12 angeordnet werden. Im Messzustand 12 ist die Sammelfläche 2 der Sammeleinheit 4 horizontal ausgerichtet, damit sich Schmutzpartikel 24 aus der Umgebungsluft ungehindert und gleichmäßig durch Sedimentation auf die Sammelfläche 2 absetzten können, wo sie durch die vorgesehenen Haftmittel 26 fixiert werden. Ferner sind die Abdeckmittel 6 im Messzustand 12 derart formschlüssig an der Sammeleinheit 4 angeordnet, dass sich keine Schmutzpartikel 24 aus der Umgebungsluft an den Innenflächen 28 der Abdeckmittel 6 festsetzen. Die Handhabungsmittel 10 sind aus knickfester Kartonage ausgebildet und erstrecken sich längs einer Längsachse L, wobei in einem Endbereich der Handhabungsmittel 10 mittels der chemisch wirkenden Verbindungsmittel 8 auf den Handhabungsmitteln 10 die Abdeckmittel 6 sowie die formschlüssig angeordnete Sammeleinheit 4 vorgesehen ist. Durch das entlang der Längsachse L gegenüberliegende Ende der Handhabungsmittel 10 werden Greifmittel 30 realisiert, die das Halten und Positionieren der Partikelsammelvorrichtung 100 durch eine nicht dargestellte Bedienperson ermöglichen. Der die Abdeckmittel 6 aufnehmende Endbereich der Handhabungsmittel 10 besitzt eine runde Außenkontur 38, die zumindest bereichsweise parallel zu dem runden Grundriss der Abdeckmittel 6 verlaufen. Durch die konstante Beabstandung der Außenkontur 38 der Handhabungsmittel 10 von dem Grundriss der Abdeckmittel 6 bzw. dem runden Grundriss der hohlzylindrischen Mantelfläche 16 der Sammeleinheit 4 wird vorteilhaft beim Positionieren der Partikelsammelvorrichtung 100 im Messzustand 12 ein Mindestabstand der Sammelfläche 2 von nicht in den Figuren grafisch dargestellten Seitenmodulen und/oder Seitenwänden des Messorts realisiert.

Die die Messung charakterisierenden Parameter können in vorgesehenen, formularartig ausgebildeten Aufdrucken 40 der Handhabungsmittel 10 eingetragen werden. Hierfür ist es besonders vorteilhaft, wenn die Handhabungsmittel 10 eine beschreibbare Oberfläche 42 aufweisen. Somit können die charakteristischen Parameter einer Messung, wie etwa der genaue Aufstellungsort der Partikelsammelvorrichtung 100 im Messzustand 12 als Messort sowie die Messzeiten durch den Vermerk der Startzeit sowie der Endzeit der Messung der Umgebungssauberkeit durch entsprechend instruiertes Bedienpersonal dokumentiert werden, wodurch sich nach einer Analyse und Auswertung der auf der Sammelfläche 2 festgesetzten Schmutzpartikel 24 eine Zuordnung zum Messort sowie der realisierten Messzeit ermöglicht wird.

Zum Beenden der Messzeit (Deaktivieren der Partikelsammelvorrichtung 100) wird die Partikelsammelvorrichtung 100 vom Messzustand 12 in den Transportzustand 14 überführt. Hierfür werden zunächst die formschlüssig unter der Sammeleinheit 4 angeordneten Abdeckmittel 6 samt den damit über die Verbindungsmittel 8 fest verbundenen Handhabungsmittel 10 durch eine parallel zur Sammelfläche 2 wirkende Kraftbeaufschlagung von der Sammeleinheit 4 gelöst. Zur Realisierung des Transportzustands 14 werden anschließend die gelösten Abdeckmittel 6 mit den Handhabungsmitteln 10 durch eine 180°-Drehung um die Längsachse L gedreht, um nun auf der Sammeleinheit 4 formschlüssig angeordnet zu werden, derart, dass sich keine weiteren Schmutzpartikel aus der Umgebungsluft auf der Sammelfläche 2 festsetzen können. Wie es aus der rechten Seite der Fig. 2 ersichtlich ist, überragen die Abdeckmittel 6 die Sammelfläche 2 vollständig und liegen formschlüssig auf der hohlzylindrischen Mantelfläche 16 auf. Somit kann ein Eindringen von zusätzlichen Schmutzpartikeln in das Innere der Sammeleinheit 4 ausgeschlossen werden. Darüber hinaus wird im Messzustand 12 durch das erfindungsgemäße formschlüssige Anordnen der Abdeckmittel 6 unter der Partikelsammelvorrichtung 100 sichergestellt, dass es im Transportzustand 14 nicht zu einer zusätzlichen Verschmutzung der Sammelfläche 2 durch zusätzliche Schmutzpartikel kommt, die sich im (vorgelagerten) Messzustand 12 an den Innenflächen 28 der Abdeckmittel 6 festgesetzt haben. Da im Transportzustand 14 erfindungsgemäß eine mechanische Fixierung der Abdeckmittel 6 auf der Sammeleinheit 4 mittels vorgesehenen Fixiermitteln 34 erfolgt, kann ein versehentliches bzw. unbeabsichtigtes Öffnen der Partikelsammelvorrichtung 100 vermieden werden, was andernfalls durch das Eindringen von zusätzlichen Schmutzpartikeln eine Verfälschung des Messergebnisses zur Folge hätte. Somit kann die transportable Partikelsammelvorrichtung 100 auch ohne zusätzliche, nur schwer wieder lösbare Sicherungselemente (insbesondere mit einem Postdienstleister) an den Analyseort verschickt werden, ohne der Gefahr, dass sich die Abdeckmittel 6 von der Sammeleinheit 4 lösen und es zu einer Verfälschung der Messung kommt.

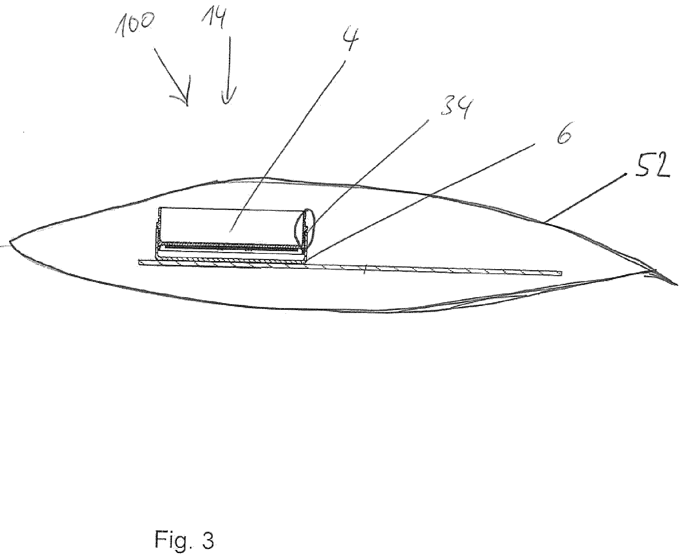

In der Fig. 3 ist die aus den vorhergehenden Figuren bekannte transportable Partikelsammelvorrichtung 100 in einer Seitenansicht im Transportzustand 14 gezeigt, wodurch sie in einem handelsüblichen Briefumschlag 52 od. dgl. Transportmittel transportierbar wäre. Durch die Fixiermittel 34 kann sichergestellt werden, dass sich die Abdeckmittel 6 nicht von der Sammeleinheit 4 lösen, was eine Verfälschung des Messergebnisses durch zusätzliche Schmutzpartikel zur Folge hätte.

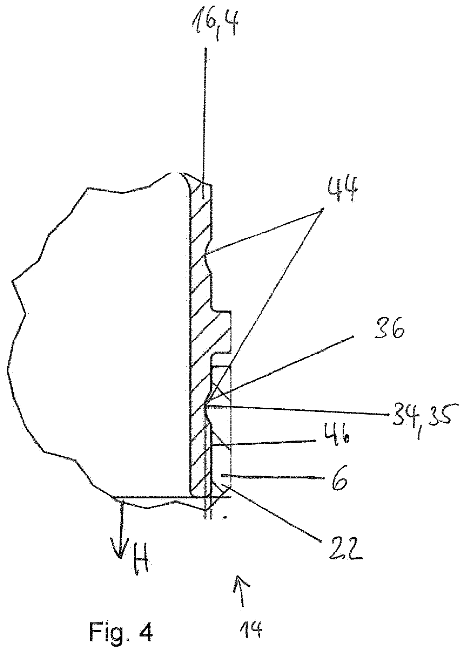

In der Fig. 4 ist der in der Fig. 3 gekennzeichnete Bereich des Randabschnitts 22 der Abdeckmittel 6 mit den vorgesehenen Fixiermitteln 34 in einem stark vergrößerten Maßstab dargestellt. Die Fixiermittel 34 sind als Rastmittel 35 ausgebildet, wobei im Randabschnitt 22 der Abdeckmittel 6 ein Rastelement 36 vorgesehen ist, dass im festgelegten Transportzustand 14 mit einer Umfangsnut 44 in der äußeren Mantelfläche 16 der Sammeleinheit 4 derart in Wirkverbindung steht, dass sich erst nach dem Aufbringen einer orthogonal zur Sammelfläche 2 wirkenden Mindestkraft in eine Heberichtung H die Abdeckmittel 6 von der Sammeleinheit 4 lösen. Darüber hinaus bildet die äußere Mantelfläche 16 der Sammeleinheit 4 eine Anlagefläche 46 zur Ausrichtung der Abdeckmittel 6 über den Randabschnitt 22 der Abdeckmittel 6 aus. Wie es aus der Fig. 4 ersichtlich ist, ist zum Festlegen der Abdeckmittel 6 im Messzustand 12 auch eine Umfangsnut 44 zum Zusammenwirken mit dem gleichen Rastelement 36 vorgesehen.

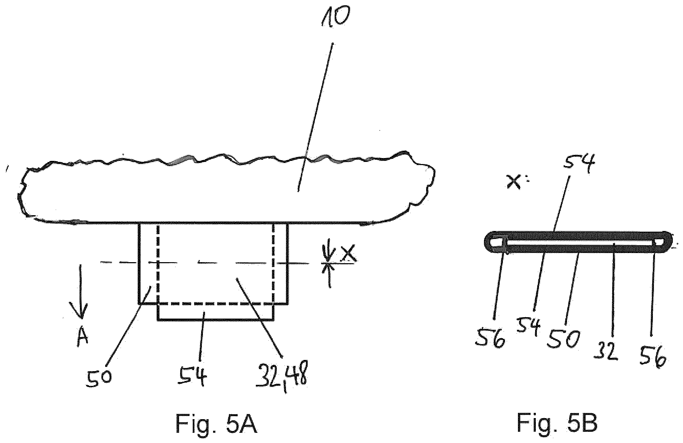

In der Fig. 5A ist ein Ausschnitt der sich in Axialrichtung A erstreckenden Handhabungsmittel 10 abgebildet, wobei das Ende der Handhabungsmittel 10 dargestellt ist, in dem der Klebestreifen 32 abschnittsweise die Handhabungsmittel 10 zur Ausbildung des Halteabschnitts 48 überragt. Zur Realisierung des Halteabschnitts 48 ist die Banderole 50 umfangsseitig um den Klebestreifen 32 bzw. um entlang der Axialrichtung A den Klebestreifen 32 überragende und unmittelbar ober- und unterseitig auf dem Klebestreifen 32 vorgesehene Folienelemente 54 angeordnet. Durch die, bevorzugt einseitig Klebemittel aufweisende, Banderole 50 werden die Seitenflächen 56 des Klebestreifens 32 vor einem unbeabsichtigten Verkleben geschützt, was auch durch die in Fig. 5B dargestellte Schnittansicht deutlich wird. Damit kann im Transportzustand 14 durch die Banderole 50 ein (unbeabsichtigtes) Verkleben von mehreren, jeweils einen Klebestreifen 32 mit einer Banderole 50 und zwei Folienelemente 54 umfassenden Partikelsammelvorrichtungen 100 verhindert werden, die somit auch in einer gemeinsamen Lagereinheit, insbesondere einem Briefumschlag 52, gelagert und/oder transportiert werden können. Neben der Ausbildung der Banderole 50 als umfangsgeschlossenes Band kann es auch zweckmäßig sein, eine streifenartige Ausbildung der Banderole 50 zu wählen, die endseitig offen ist, wobei hier dann die Seitenfläche 56 des Klebestreifens 32 von den offenen Enden der Banderole 50 deutlich überragt werden, um auch hier ein unbeabsichtigtes Verkleben zu verhindern.

### Bezugszeichen

- 2: Sammelfläche
- 4: Sammeleinheit
- 6: Abdeckmittel
- 8: Verbindungsmittel
- 10: Handhabungsmittel
- 12: Messzustand
- 14: Transportzustand
- 16: hohlzylindrische Mantelfläche
- 18: Boden- und/oder Etagenelement
- 20: Randbereich
- 22: Randabschnitt
- 24: Schmutzpartikel
- 26: Haftmittel
- 28: Innenfläche
- 30: Greifmittel
- 32: Klebestreifen
- 34: Fixiermittel
- 35: Rastmittel
- 36: Rastelement
- 38: Außenkontur der Handhabungsmittel
- 40: Aufdruck
- 42: beschreibbare Oberfläche
- 44: Umfangsnut
- 46: Anlagefläche
- 48: Halteabschnitt
- 50: Banderole
- 52: Briefumschlag
- 54: Folienelement
- 56: Seitenfläche des Klebestreifens

- 100: Partikelsammelvorrichtung

- L: Längsachse
- H: Heberichtung
- A: Axialrichtung in Bezug auf Handhabungsmittel

## Patentansprüche

1. Transportable Partikelsammelvorrichtung (100) zur Überwachung einer Umgebungssauberkeit an einem Messort, insbesondere in einer Produktionsstätte, mit einer Sammeleinheit (4), die während einer Messzeit in einem Messzustand (12) so angeordnet ist, dass eine Sammelfläche (2) zum Sammeln von sedimentierenden Schmutzpartikeln (24) aus der Umgebungsluft, insbesondere horizontal, ausgerichtet ist, wobei die Sammelfläche (2) zum Fixieren der auf der Sammelfläche (2) sedimentierten Schmutzpartikel (24), insbesondere chemisch wirkende, Haftmittel (26) aufweist und mit Abdeckmitteln (6), die in einem Transportzustand (14) formschlüssig auf der Sammeleinheit (4) anordnenbar sind, so dass keine weiteren Schmutzpartikel aus der Umgebungsluft auf die Sammelfläche (2) sedimentieren,
**dadurch gekennzeichnet,**
**dass** die Sammeleinheit (4) eine ein Boden- und/oder Etagenelement (18) umfassende hohlzylindrische oder kegelförmige Mantelfläche (16) aufweist, wobei die Innenfläche des Boden- bzw. Etagenelements (18) die Sammelfläche (2) aufweist und die Sammelfläche (4) in einer Hochrichtung nicht von der Mantelfläche überragt wird, wobei auch im Messzustand (12) die Abdeckmittel (6) mit der Sammeleinheit (4) formschlüssig zueinander angeordnet sind, derartig, dass auf sämtlichen Innenflächen (28) der Abdeckmittel (6) keine Schmutzpartikel aus der Umgebungsluft sedimentieren und dass im Transportzustand (14) eine Fixierung der Abdeckmittel (6) mit der Sammeleinheit (4) durch vorgesehene mechanisch wirkende Fixiermittel (34) erfolgt, wobei die Abdeckmittel (6) flächig ausgebildet sind und die Sammeleinheit (4) in einem Randbereich (20) wenigstens bereichsweise überragen, wobei der Randbereich (20) wenigstens einen winklig zur Flächenerstreckung der Abdeckmittel (6) angeordneten Randabschnitt (22) aufweist, wobei der Randabschnitt (22) im Transportzustand (14) und im Messzustand (12), insbesondere innen- und/oder endseitig, mit wenigstens einer Anlagefläche (46) der Sammeleinheit (4) in Wirkverbindung steht, wobei die Fixiermittel in dem Randabschnitt vorgesehen sind und eine mechanische Fixierung und Ausrichtung der Abdeckmittel über die Anlagefläche der Sammeleinheit ermöglichen.

2. Partikelsammelvorrichtung nach Anspruch 1,
dass im Transportzustand (14) die formschlüssige Anordnung der Abdeckmittel (6) auf der Sammeleinheit (4) durch eine orthogonal zur Sammelfläche (2) wirkende Kraftbeaufschlagung in eine Heberichtung (H) lösbar ist und
dass im Messzustand (12) die formschlüssige Anordnung zwischen Sammeleinheit (4) und den Abdeckmitteln (6) durch eine entgegen der Heberichtung (H) gerichtete Kraftbeaufschlagung lösbar ist.

3. Partikelsammelvorrichtung nach Anspruch 1 oder 2,
**dadurch gekennzeichnet,**
**dass** im Transportzustand (14) die Fixiermittel (34) zum Fixieren der Abdeckmittel (6) auf der Sammeleinheit (4), insbesondere elastisch deformierbare, Rastmittel (35) umfassen, wobei bevorzugt der Randabschnitt (22) ein Rastelement (36) umfasst, dass im Transportzustand (14) in eine Umfangsnut (44) der Sammeleinheit (4) eingreift.

4. Partikelsammelvorrichtung nach einem der Ansprüche 1 bis 3,
**dadurch gekennzeichnet,**
**dass** die Sammeleinheit (4) eine Hocherstreckung zwischen 0,5 cm bis 5 cm, bevorzugt zwischen 0,5 cm bis 2,5 cm und/oder eine Quer- und/oder Längserstreckung und/oder Radialerstreckung zwischen 2 cm bis 15 cm, bevorzugt zwischen 4 cm bis 10 cm aufweist.

5. Partikelsammelvorrichtung nach einem der Ansprüche 1 bis 4,
**dadurch gekennzeichnet,**
**dass** die Sammeleinheit (4) und/oder die Abdeckmittel (6) aus einem Kunststoffmaterial, insbesondere aus einem Plastomermaterial, hergestellt ist/sind und/oder transparent ausgebildet ist/sind.

6. Partikelsammelvorrichtung nach einem der Ansprüche 1 bis 5,
**dadurch gekennzeichnet,**
**dass** die Sammelfläche (2) und/oder die Haftmittel (26) für eine optische Sichtprüfung des Verschmutzungsgrads eine weiße oder schwarze Kontrastfärbung (48) aufweisen.

7. Partikelsammelvorrichtung nach einem der Ansprüche 1 bis 6,
**dadurch gekennzeichnet,**
**dass** im Messzustand (12) die Partikelsammelvorrichtung (100) auf, insbesondere eine Positionierungsmarkierung aufweisenden, flächig ausgebildeten Handhabungsmitteln (10) zum beabstandeten Anordnen der Sammeleinheit (4) von Seitenmodulen und/oder Seitenwänden des Messorts, insbesondere der Produktionsstätte, anordnenbar ist.

8. Partikelsammelvorrichtung nach Anspruch 7,
**dadurch gekennzeichnet,**
**dass** die Handhabungsmittel (10) mit den Abdeckmitteln (6), insbesondere über mechanische und/oder chemische Verbindungsmittel (8), fixiert sind, wobei im Messzustand (12) die formschlüssig zu der Sammeleinheit (4) angeordneten Abdeckmittel (6) auf den Handhabungsmitteln (10) angeordnet sind.

9. Partikelsammelvorrichtung nach einem der Ansprüche 7 oder 8,
**dadurch gekennzeichnet,**
**dass** die flächig ausgebildeten Handhabungsmittel (10) eine beschreibbare Oberfläche (42) aufweisen, wobei ausfüllbare, insbesondere formularartige, Aufdrucke (40) vorgesehen sind.

10. Partikelsammelvorrichtung nach einem der Ansprüche 7 bis 9,
**dadurch gekennzeichnet,**
**dass** die flächig ausgebildeten Handhabungsmittel (10) aus Papier, Kartonage und/oder einer insbesondere aus Kunststoff bestehenden, Folie ausgebildet sind.

11. Partikelsammelvorrichtung nach einem der Ansprüche 7 bis 10,
**dadurch gekennzeichnet,**
**dass** sich die Handhabungsmittel (10) entlang einer Längsachse (L) erstrecken, wobei im Messzustand (12) einends die Sammeleinheit (4) und/oder die Abdeckmittel (6) vorgesehen ist und anderenends die Handhabungsmittel (10) Greifmittel (30) zum Greifen und Positionieren der Partikelsammelvorrichtung (100) ausbildet.

12. Partikelsammelvorrichtung nach 11,
**dadurch gekennzeichnet,**
**dass** endseitig die Außenkontur (38) der Handhabungsmittel (10) wenigstens abschnittsweise Parallelkurven zur, insbesondere hohlzylindrischen oder kegelförmigen, Mantelfläche (16) der Sammeleinheit (4) ausbildet.

13. Partikelsammelvorrichtung nach einem der Ansprüche 7 bis 12,
**dadurch gekennzeichnet,**
**dass** den Handhabungsmitteln (10) ein, insbesondere lösbarer, Klebestreifen (32) zum Ausbilden einer chemischen Klebeverbindung zwischen der Unterseite der Handhabungsmittel (10) und einem Untergrund am Messort zugeordnet ist, wobei der Klebestreifen (32) die Handhabungsmittel (10), insbesondere entlang der Längsachse (L), zum Ausbilden eines Halteabschnitts (48) zwischen Daumen und Zeigefinger abschnittsweise überragt und wobei der Halteabschnitt (48) von einer Banderole (50) umgeben ist, die in Wirkverbindung mit dem Klebestreifen (32) steht.

## Claims

1. A transportable particle collection device (100) for monitoring an environment cleanliness at a measuring location, in particular at a production site, having a collection unit (4) which is disposed in such a manner in a measuring state (12) during a measuring time that a collection surface (2) for collecting deposited dirt particles (24) from the environment air is aligned in particular horizontally, the collection surface (2) having, in particular chemically acting, adhesion means (26) for fixating the dirt particles (24) deposited on the collection surface (2), and having covering means (6) which are disposable on the collection unit (4) in a form-fit manner in a transport state (14) such that no other dirt particles are deposited on the collection surface (2) from the environment air,
**characterized in that**
the collection unit (4) has a hollow-cylindrical or conical jacket surface (16) comprising a bottom element and/or tier element (18), the inner surface of the bottom element and/or tier element (18) having the collection surface (2) and the jacket surface not protruding beyond the collection surface (4) in height, the covering means (6) being disposed in a form-fit manner with the collection unit (4) in the measuring state as well such that no dirt particles are deposited from the environment air on any inner surfaces (28) of the covering means (6) and that the covering means (6) are fixed on the collection unit (4) via designated mechanically acting fixation means (34) in the transport state (14), the covering means (6) being planar and the collection unit (4) protruding at least in sections in an edge area (20), the edge area (20) having at least one edge section (22) disposed angularly to the planar extension of the covering means (6), the edge section (22) being in operative connection with, in particular the interior and/or the end of, at least one abutment surface (46) of the collection unit (4) in the transport state (14) and in the measuring state (12), the fixation means being provided in the edge section and allowing a mechanical fixation and alignment of the covering means via the abutment surface of the collection unit.

2. The particle collection device according to claim 1,
**characterized in that**
the form-fit position of the covering means (6) on the collection unit (4) is released by applying force which acts orthogonally to the collection surface (2) in a lifting direction (H) in the transport state, and
**in that** the form-fit position between the collection unit (4) and the covering means (6) is released by applying force which is directed in the opposite direction of the lifting direction (H) in the measuring state (12).

3. The particle collection device according to claim 1 or 2,
**characterized in that**
the fixation means (34) comprise, in particular elastically deformable, locking means (35) in the transport state (14) in order to fixate the covering means (6) on the collection unit (4), the edge section (22) preferably comprising a locking element (36) which engages in a circumferential groove (44) of the collection unit (4) in the transport state (14).

4. The particle collection device according to any one of the claims 1 to 3,
**characterized in that**
the collection unit (4) has a height between 0.5 cm to 5 cm, preferably between 0.5 cm to 2.5 cm, and/or a transverse extension and/or a length and/or a radial extension between 2 cm to 15 cm, preferably between 4 cm to 10 cm.

5. The particle collection device according to any one of the claims 1 to 4,
**characterized in that**
the collection unit (4) and/or the covering means (6) is made of a plastic material, in particular of a plastomer material, and/or is transparent.

6. The particle collection device according to any one of the claims 1 to 5,
**characterized in that**
the collection surface (2) and/or the adhesive means (26) have a white or black contrast coloring (48) for a visual examination of the degree of dirtiness,

7. The particle collection device according to any one of the claims 1 to 6,
**characterized in that**
in the measuring state, the particle collection device (100) is disposable on planar handling means (10), in particular having a positioning marking, for the spaced positioning of the collection unit (4) from lateral modules and/or lateral walls of the measuring space, in particular the production site.

8. The particle collection device according to claim 7,
**characterized in that**
the handling means (10) are fixed on the covering means (6), in particular via mechanical and/or chemical connective means (8), the covering means (6) disposed in a form-fit manner with the collection unit (4) being disposed on the handling means (10) in the measuring state (12).

9. The particle collection device according to claim 7 or 8,
**characterized in that**
the planar handling means (10) have a surface (42) configured to be written on, printings (40), in particular form-like printings, intended to be filled out being provided.

10. The particle collection device according to any one of the claims 7 to 9,
**characterized in that**
the planar handling means (10) are made of paper, cardboard and/or a film made in particular of plastic.

11. The particle collection device according to any one of the claims 7 to 10,
**characterized in that**
the handling means (10) extend along a length (L), the collection unit (4) and/or the covering means (6) being provided on one end in the measuring state (12) and the handling means (10) forming grabbing means (30) for grabbing and positioning the particle collection device (100) in the measuring state (12).

12. The particle collection device according to claim 11,
**characterized in that**
the end of the outer contour (38) of the handling means (10) forms at least sections of curves parallel to the, in particular hollow-cylindrical or conical, jacket surface (16) of the collection unit (4).

13. The particle collection device according to any one of the claims 7 to 12,
**characterized in that**
an adhesive strip (32) for forming a chemical adhesive connection between the underside of the handling means (10) and a base at the measuring location is assigned to the handling means (10), sections of the adhesive strip (32) protruding beyond the handling means (10), in particular along the length (L), for forming a holding section (48) between thumb and forefinger and the holding section (48) being surrounded by a label (50) in operative connection with the adhesive strip (32).

## Revendications

1. Dispositif (100) transportable pour la collection de particules pour surveiller la propreté d'un environnement à un lieu de mesure, notamment à un site de production, ayant une unité de collection (4) qui est disposée dans un état de mesure (12) pendant un temps de mesure de telle manière qu'une surface de collection (2) pour collecter les particules de saleté (24) déposées de l'air d'environnement est alignée notamment horizontalement, la surface de collection (2) ayant des moyens autocollants (26), notamment agissants chimiquement, pour fixer les particules de saleté (24) déposées sur la surface de collection (2), et ayant des moyens de couvercle (6) qui peuvent être disposés sur l'unité de collection (4) d'une manière adaptée à la forme dans un état de transport (14) de sorte qu'aucune autre particule de saleté ne soit déposée sur la surface de collection (2) de l'air d'environnement,
**caractérisé en ce que**
l'unité de collection (4) a une surface extérieure (16) en forme de cylindre ou de cône creux et comprenant un élément de fond et/ou un élément de niveau (18), la surface intérieure de l'élément de fond et/ou de l'élément de niveau (18) ayant la surface de collection (2) et la surface extérieure ne faisant pas saillie sur la surface de collection (4) en hauteur, les moyens de couvercle (6) étant disposés de manière à épouser la forme de l'unité de collection (4) dans l'état de mesure, de sorte qu'aucune particule de saleté ne se dépose de l'air d'environnement sur aucunes surfaces intérieures (28) des moyens de couvercle (6) et que les moyens de couvercle (6) soient fixés à l'unité de collection (4) par l'intermédiaire de moyens de fixation (34) à action mécanique désignés dans l'état de transport (14), les moyens de couvercle (6) étant plans et au moins des zones de l'unité de collection (4) faisant saillie dans une zone de bord (20), la zone de bord (20) ayant au moins une partie de bord (22) disposée angulairement par rapport à l'extension plane des moyens de couvercle (6), la partie de bord (22) étant en connexion opérationnelle avec la zone de bord (20), la zone de bord (20) ayant au moins une partie de bord (22) disposée angulairement par rapport à l'extension plane des moyens de couvercle (6), la partie de bord (22) étant en connexion opérationnelle avec notamment l'intérieur et/ou l'extrémité d'au moins une surface d'appui (46) de l'unité de collection (4) dans l'état de transport (14) et dans l'état de mesure (12), les moyens de fixation étant prévus dans la partie de bord et permettant une fixation mécanique et un alignement des moyens de couvercle par l'intermédiaire de la surface d'appui de l'unité de connexion.

2. Dispositif pour la collection de particules selon la revendication 1,
**caractérisé en ce que**
la position par forme des moyens de couvercle (6) sur l'unité de collection (4) est libérée par l'application d'une force qui agit orthogonalement à la surface de collection (2) dans une direction de levage (H) dans l'état de transport, et
**en ce que** la position par forme entre l'unité de collection (4) et les moyens de couvercle (6) est libérée par l'application d'une force qui est dirigée dans la direction opposée à la direction de levage (H) dans l'état de mesure (12).

3. Dispositif pour la collection de particules selon la revendication 1 ou la revendication 2,
**caractérisé en ce que**
les moyens de fixation (34) comprennent des moyens de verrouillage (35) , notamment élastiquement déformables, dans l'état de transport (14) afin de fixer les moyens de couvercle (6) sur l'unité de collection (4), la partie de bord (22) comprenant de préférence un élément de verrouillage (36) qui s'engage dans une rainure circonférentielle (44) de l'unité de collection (4) dans l'état de transport (14).

4. Dispositif pour la collection de particules selon l'une quelconque des revendications 1 à 3,
**caractérisé en ce que**
l'unité de collection (4) a une hauteur comprise entre 0,5 cm et 5 cm, de préférence entre 0,5 cm et 2,5 cm, et/ou une extension transversale et/ou une longueur et/ou une extension radiale comprise entre 2 cm et 15 cm, de préférence entre 4cm et 10 cm.

5. Dispositif pour la collection de particules selon l'une quelconque des revendications 1 à 4,
**caractérisé en ce que**
l'unité de collection (4) et/ou les moyens de couvercle (6) sont constitués d'un matériau plastique, notamment d'un matériau plastomère, et/ou sont transparents.

6. Dispositif pour la collection de particules selon l'une quelconque des revendications 1 à 5,
**caractérisé en ce que**
la surface de collection (2) et/ou les moyens adhésifs (2) ont une coloration contrastée (48) blanche ou noire pour un examen visuel du degré de saleté,

7. Dispositif pour la collection de particules selon l'une quelconque des revendications 1 à 6,
**caractérisé en ce que**
dans l'état de mesure, le dispositif (100) pour la collection de particules est disposé sur des moyens de manutention (10) plans, ayant notamment des marquages de positionnement, pour le positionnement espacé de l'unité de collection (4) de modules latéraux et/ou de parois latérales du lieu de mesure, notamment du site de production.

8. Dispositif pour la collection de particules selon la revendication 7,
**caractérisé en ce que**
les moyens de manutention (10) sont fixés aux moyens de couvercle (6), notamment par l'intermédiaire des moyens de connexion mécaniques et/ou chimiques (8), les moyens de couvercle (6) disposés sur l'unité de collection (4) de manière à s'adapter à la forme étant disposés sur les moyens de manutention (10) dans l'état de mesure (12).

9. Dispositif pour la collection de particules selon la revendication 7 ou la revendication 8,
**caractérisé en ce que**
les moyens de manutention (10) plans ont une surface inscriptible (42), des impressions (40), notamment de en forme de formulaire, qui peuvent être remplies étant fournies.

10. Dispositif pour la collection de particules selon l'une quelconque des revendications 7 à 9,
**caractérisé en ce que**
les moyens de manutention (10) plans sont fait en papier, en carton et/ou en un film notamment en plastique.

11. Dispositif pour la collection de particules selon l'une quelconque des revendications 7 à 10,
**caractérisé en ce que**
les moyens de manutention (10) s'étendent sur un axe de longueur (L), l'unité de collection (4) et/ou les moyens de couvercle (6) étant prévus à une extrémité dans l'état de mesure (12) et les moyens de manutention (10) formant des moyens de saisie (30) pour saisir et positionner le dispositif (100) pour la collection de particules à l'autre extrémité dans l'état de mesure (12).

12. Dispositif pour la collection de particules selon la revendication 11,
**caractérisé en ce que**
le contour extérieur (38) du moyen de manutention (10) forme au moins des zones de courbes parallèles à la surface extérieure (16), notamment en forme de cylindre creux ou de cône, de l'unité de collection (4) à l'extrémité.

13. Dispositif pour la collection de particules selon l'une quelconque des revendications 7 à 12,
**caractérisé en ce**
**qu'**une bande adhésive (32), notamment amovible, destinée à former une connexion chimique adhésive entre la face inférieure du moyen de manutention et une base du lieu de mesure est associée au moyen de manipulation (10), des parties de la bande adhésive (32) faisant saillie sur le moyen de manutention (10), notamment sur la longueur (L), pour former une partie de maintien (48) entre le pouce et l'index et la partie de maintien (48) étant entourée d'une bande d'emballage (50) qui est en connexion opérationnelle avec la bande adhésive (32).
